# EUROPEAN PATENT SPECIFICATION

(11) **EP 4 006 386 B1**
(45) Date of publication and mention of the grant of the patent: **13.08.2025**
(21) Application number: 21210482.2
(22) Date of filing: 25.11.2021
(51) Int. Cl.: F16H 61/4192

(54) **METHOD OF DETERMINING A TEMPERATURE OF A HYDRAULIC OIL OF A HYDRAULIC TRANSMISSION**
VERFAHREN ZUR BESTIMMUNG DER TEMPERATUR EINES HYDRAULIKÖLS EINES HYDRAULIKGETRIEBES
PROCÉDÉ POUR DÉTERMINER LA TEMPÉRATURE D'UNE HUILE HYDRAULIQUE D'UNE TRANSMISSION HYDRAULIQUE

(30) Priority: 27.11.2020 IT 202000028715
(43) Date of publication of application: 01.06.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(56) References cited:
- WO-A2-2012/153198
- JP-A- 2001 165 308
- US-A1- 2004 221 573
- US-A1- 2008 238 187
- US-A1- 2014 329 642

## Description

### Field of the invention

The present invention relates to the field of hydraulic transmissions and hydraulic actuation systems, in particular to the methods for the supervision of said transmissions. For the purposes of this description, the term "determine" or "determination" means "calculate", "identify" and not absolutely to "cause" or "force".

### State of the art

Motorized agricultural or work vehicles are well known for handling materials and performing specific heavy tasks.

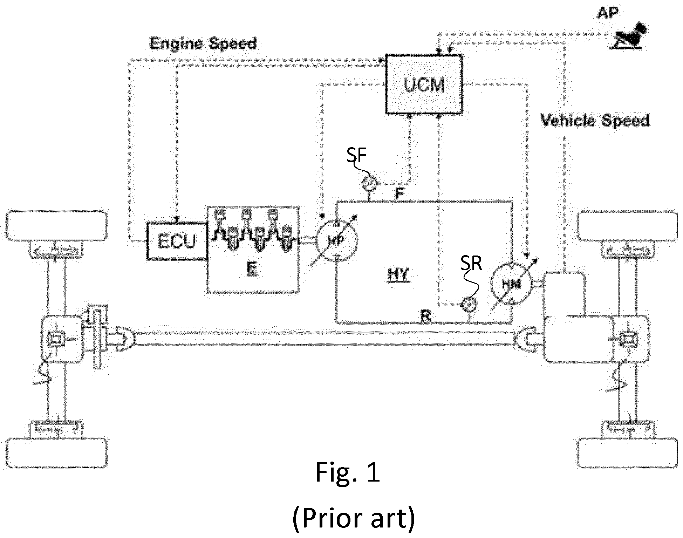

With reference to figure 1 of the prior art, a prime mover E, generally an internal combustion, drives in rotation a variable displacement hydraulic pump HP, which feeds a variable displacement HM hydraulic motor operatively connected to the hydraulic pump defining a so-called hydrostat HY, in which a delivery hydraulic line F and a return hydraulic line R interconnect the hydraulic pump with the hydraulic motor.

An example of this configuration can be found in JP2001-165308A.

To better define the diagram in Figure 1, this transmission is referred to as a "series" hydraulic transmission, in the sense that the connection between the prime mover and the vehicle wheels occurs exclusively through the hydrostat.

The displacement of the hydraulic pump is electrically controlled. Generally, there is a map of adjustments of the displacement of the hydraulic pump, which allows to control the displacement of the latter according to the rotation speed of the prime mover. Typically, the relationship between the pump displacement and the speed of the prime mover is linear and the displacement grows with speed increasing.

The displacement of the hydraulic motor is electrically controlled.

Generally, there is a map of adjustments of the geometry of the hydraulic motor, which allows the relative displacement to be controlled as a function of the pressure generated on the delivery F and return R hydraulic lines or as a function of the speed of the vehicle.

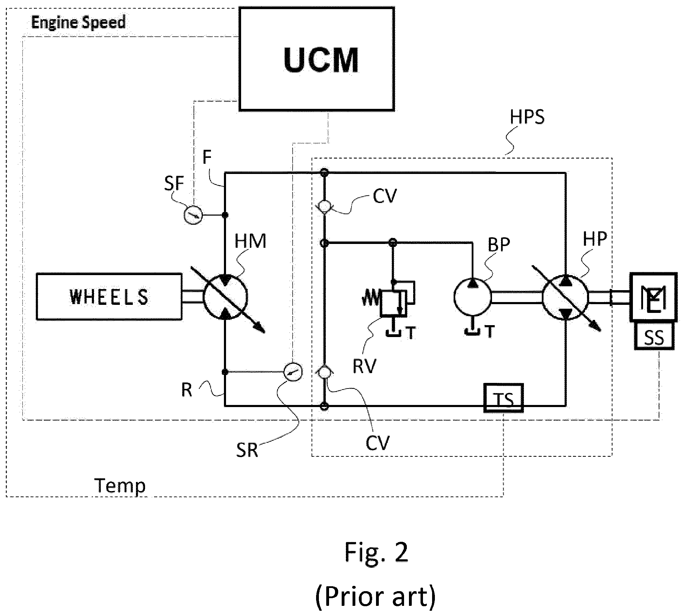

Figure 2 shows in detail some portions of the diagram of Figure 1.

This diagram shows the prime mover E, which rotates at a variable displacement pump HP, which feeds the variable displacement motor HM operatively connected to the vehicular wheels "WHEELS". The pump and the hydraulic motor are connected by means of the delivery F and return R hydraulic lines.

A so-called "Booster pump" BP is associated with the hydraulic pump which has the task of keeping the hydraulic return line pressurized.

For example, if the hydrostat operates to move the vehicle delivery, the delivery line is pressurized, while the return line is inactive, i.e. depressurized. Evidently, in relation to the delivery or reverse movement of the vehicle, the roles of the two hydraulic lines are reversed.

The depressurization of the return line can reaches the condition in which the hydraulic oil entering the hydraulic pump HP is insufficient and therefore it begins to cavitate being damaged. To avoid this problem, the booster pump BP, similarly, is driven in rotation by the prime mover, and takes care of drawing hydraulic oil from the hydraulic oil recovery tank T and supplying it in the hydraulic return line.

The output of the booster pump is, therefore, connected to both the delivery and return hydraulic lines by means of the respective check valves CV.

The pressure of the hydraulic oil to be established in the hydraulic return line is regulated by a mechanical valve RV placed between the outlet of the booster pump BP and the two non-return valves CV. This pressurization is such as to avoid cavitation of the hydraulic pump, but is also low enough not to oppose the operation of the hydraulic pump HP. In other words, this pressurization is strictly sufficient to avoid cavitation in the hydraulic pump HP.

Generally, the group HPS comprising the HP hydraulic pump, the BP booster pump and the regulating valve RV is inserted in a single casing and available on the market already built.

Pressure sensors SF and SR are respectively arranged on each of the hydraulic delivery and return lines.

These sensors are operationally associated with a processing unit UCM, which controls various further parameters of the transmission including the rotation speed "Engine Speed" of the prime mover E, the vehicle speed "Vehicle Speed", the position of the accelerator AP pedals and brake. In addition, the UCM processing unit interfaces with the ECU engine control unit. Generally the prime mover is an internal combustion engine and therefore the engine control unit E supervises the operating parameters of the same engine and interfaces with the processing unit UCM which therefore appears to be complementary with the engine control unit ECU.

An accurate control of the hydrostat must take into account the temperature of the hydraulic oil. To do this, a temperature sensor is usually installed.

The temperature sensors are delicate and have a very limited duration over time. Therefore, in some circumstances even two temperature sensors are installed in order to monitor the wear status of the sensors and detect their degradation when there is an excessive difference between the contextual measurements of the two sensors.

This solution represents an aggravation of costs and maintenance times of the agricultural or work vehicle.

### Summary of the invention

The object of the present invention is to reduce the number of temperature sensors associated with a hydraulic transmission.

The basic idea of the present invention is to obtain the temperature of the hydraulic oil indirectly from the measurement of the pressure on the hydraulic return line.

The control valve, in fact, has a behaviour dependent on the temperature of the hydraulic oil. Therefore, from the pressurization value of the return hydraulic line, once the characteristic of the control valve is known, it is possible to indirectly obtain the temperature of the hydraulic oil.

According to a first aspect of the invention, no temperature sensor is installed in the hydraulic transmission and therefore, the information about the temperature of the hydraulic oil is obtained exclusively from the measurement of the pressure on the hydraulic return line.

Advantageously, a pressure sensor is always installed on both hydraulic lines, therefore the present invention is easy to implement as it does not require hardware changes but rather an implementation of a method for calculating the temperature on the basis of the measured pressure and on the basis the characteristic of the regulating valve of the pressurization of the hydraulic return line.

According to a second aspect of the invention, a single temperature sensor is implemented and the temperature obtained indirectly from the pressurization value of the return hydraulic line is used to monitor the operating status of the temperature sensor and to signal any excessive difference between the measurements.

According to a preferred aspect of the present invention, the calculated or corrected temperature value is used to limit a rotation speed of the heat engine, so as to avoid damage to hydraulic components when, when cold, the viscosity of the hydraulic fluid is increased. Among these hydraulic components, those fed by the same hydraulic fluid but which are not strictly part of the transmission, such as boom and bucket, are also considered.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figure 1 shows a diagram of the propulsion system of an agricultural or work vehicle including a hydrostat according to the known art;
Figure 2 shows in detail the hydrostat of figure 1 with in particular the presence of a booster pump and a pressure regulating valve of the hydraulic return line;
Figure 3 shows a graph representing the characteristic of the pressure regulating valve of the hydraulic return line;
Figure 4 shows a flow diagram represented by an example of implementation of the present invention;

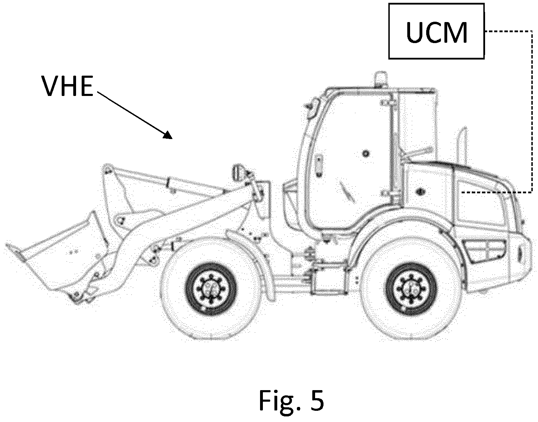

Figure 5 shows an agricultural or work vehicle implementing the present invention.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

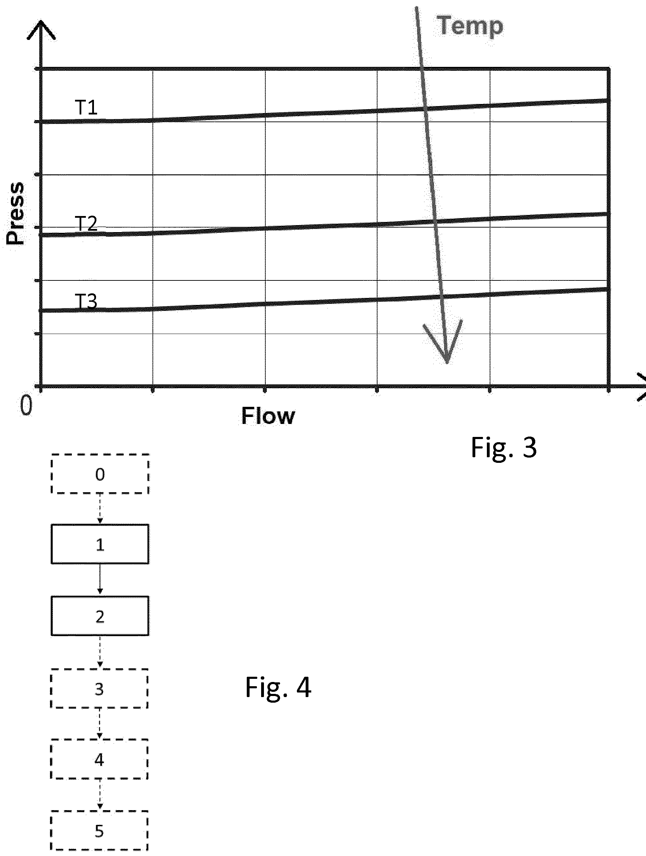

The blocks of the flow diagram of figure 4 shown in hatched are optional, while the dashed connectors of figure 2 represent electrical connections for the transmission of signals.

### Detailed description of exemplary embodiments

According to the present invention, the measurement of the pressure on the hydraulic return line that connects the hydraulic pump with the hydraulic motor of the hydrostat is used to identify the temperature of the hydraulic oil.

Figure 3 shows the characteristic of the control valve RV described above.

The regulation pressure of the valve has a bundle of almost horizontal curves drawn as a function of the temperature T1, T2, T3, etc .. and in which each curve relates the regulation pressure with the flow of oil generated by the booster pump.

The control valve RV is mechanical, in the sense that its operation cannot be modified from the outside and its behavior depends on the construction characteristics of the valve itself.

Therefore, the present invention presents a method for determining the temperature of the hydraulic oil of a hydrostat HY comprising a hydraulic pump HP arranged to be driven in rotation by a prime mover E, generally an internal combustion engine, and a hydraulic motor HM operatively connected with a vehicular wheel Wheels. The hydraulic motor is operatively associated with the hydraulic pump by means of a hydraulic delivery line F and a hydraulic return line R of the hydraulic liquid.

The hydraulic pump is associated in the HPS group with the booster pump BP, able to be driven in rotation by the prime mover and configured to pressurize the hydraulic liquid return line through the mechanical RV regulation valve, calibrated to pressurize the return line in at least as a function of the hydraulic oil temperature.

Thus the present method of determining the temperature of the hydraulic oil, with reference to Figure 4, includes
- a first step (step 1) to acquire a pressure value of the hydraulic return line and
- a consequent second step (step 2) of converting said pressure value into a first temperature value on the basis of the setting of the regulation valve RV.

On the other hand, when the flow (Flow/Flusso) is also taken into consideration to identify the pressure value Press in the characteristic of the valve, then the look up table is preferably three-dimensional as there are two input parameters and one output.

The booster pump flow is directly proportional to the rotation speed of the prime mover E which drives the HPS unit in rotation, therefore, once the prime mover rotational speed is known, it is immediately possible to calculate (step 0) the flow generated by the booster pump. At the same time, by measuring the pressure on the hydraulic return line, it is possible to obtain the temperature of the hydraulic oil, precisely because the pressure established in the return line depends on the construction characteristics of the control valve.

While the HP hydraulic pump and/or the HM hydraulic motor can be variable displacement, the BP booster pump is generally fixed displacement.

It is worth highlighting the fact that the T1 - T3 curves shown in the graph of figure 3 have a very modest positive slope, resulting almost horizontal. This means that, unless a certain approximation, it is possible to derive the temperature of the hydraulic oil directly from the pressure value measured neglecting the flow generated by the booster pump. Obviously, the more the T1-T3 curves are horizontal, the more the error is contained.

Advantageously, thanks to the present invention it is possible to obtain an estimation of the temperature of the hydraulic oil of the hydraulic transmission without necessarily having a temperature sensor associated with the same transmission.

When the temperature sensor TS is already present, then the present invention can be implemented to monitor (step 3) the wear of the same temperature sensor, signalling (step 4) any excessive deviations that can affect the limitation (Step 5) of the maximum speed of rotation of the prime mover as a function of the temperature of the hydraulic fluid, with the risk of damaging a hydraulic component when the hydraulic fluid is in conditions of low temperature.

When excessive deviations are detected (step 3) between the temperature measurement carried out by means of the temperature sensor TS and the temperature calculated according to this strategy, a further and consequent fourth step can be envisaged (step 4) including
- signaling of a malfunction of the temperature sensor, when said comparison exceeds a first predetermined threshold,
- correction of the second temperature value on the basis of the first temperature value, when said comparison is lower than a second predetermined threshold lower than said first threshold.

In other words, as long as the deviation is acceptable, i.e. lower than the second threshold, the temperature value actually used is mediated between the values of the temperature sensor and the strategy described here obtained independently, vice versa, when the deviation is excessive, i.e. it exceeds the first threshold, the issue is signalled to the driver of the vehicle by means of a warning light or any other human/machine interface device on board the vehicle.

Obviously, the first and second thresholds can be positioned appropriately according to the needs of the case. Preferably, the second threshold is lower than the first one.

The strategy object of the present invention can be advantageously implemented in a processing unit UCM which is generally arranged and programmed to receive signals coming from the vehicle control cabin, relating to the brake, the accelerator, etc. and also arranged for monitor and control various sub-systems such as the hydraulic transmission as well as other sub-systems such as boom and operating organs connected/connectable to the vehicle.

Therefore, the present invention also refers to a system for determining a temperature of the hydraulic oil of a hydrostat HY as described above, wherein the system comprises
- a pressure sensor SR, SF arranged on the hydraulic return line and
- processing means UCM operatively associated with the pressure sensor and configured to calculate a first temperature value of the hydraulic oil on the basis of a pressure value measured by the pressure sensor by means of a look up table that maps the calibration of the control valve RV pressurizing the hydrostat return line.

The present invention also refers to a system for monitoring an operating condition of a temperature sensor TS associated with the hydrostat HY of a hydraulic transmission to measure a temperature of a relative hydraulic oil, so as to correct the temperature value measured by the temperature sensor and/or report a malfunction of the temperature sensor.

In this case, the system also comprises the temperature sensor or means for acquiring the signals generated by it to determine the operating state of the temperature sensor itself.

The present invention can be advantageously implemented by means of a computer program, which comprises coding means for carrying out all steps of the method, when this program is executed on a computer. Therefore, it is intended that the scope of protection extends to said computer program and further to computer readable means comprising a recorded message, said computer readable means comprising program coding means for carrying out one or more steps of the method, when said program is run on a computer.

From the above description, the person skilled in the art is able to realize the object of the invention without introducing further construction details.

## Claims

1. Method for determining a temperature of a hydraulic oil of a hydrostat (HY) comprising a hydraulic pump (HP) adapted to be driven in rotation by a prime mover (E) and a hydraulic motor (HM) operatively connected to a vehicle wheel (Wheels), the hydraulic motor being operatively associated with the hydraulic pump by means of a hydraulic delivery line (F) and a hydraulic return line (R) of the hydraulic fluid, the hydraulic pump being associated in a group (HPS) to a booster pump (BP), adapted to be driven in rotation by the prime mover and configured to pressurize said hydraulic return line through a mechanical regulating valve (RV), calibrated to pressurize the hydraulic return line at least as a function of the hydraulic oil temperature, the method for determining the temperature of the hydraulic oil including a first step (step 1) of acquiring a pressure value of the hydraulic return line and a consequent second step (step 2) of converting said pressure value into a first temperature value based on the setting of the regulating valve (RV), the method is **characterized in that** said regulating valve is calibrated to pressurize the return line as a function of the temperature of the hydraulic oil and the flow generated by the booster pump, and wherein the valve calibration is mapped to a look up table 3D able to relate a pressure and a flow, generated by the booster pump, with a temperature of the hydraulic oil.

2. Method according to claim 1, wherein said flow value is calculated (step 0) on the basis of a rotational speed of the prime mover (E) which drives the booster pump in rotation.

3. Method according to any one of the preceding claims, further comprising a third step (step 3) of comparing said first temperature value with a second temperature value obtained from a temperature sensor (TS) operatively associated with the hydrostat, and a consequent fourth step (step 4) comprising
- signalling of a malfunction of the temperature sensor, when said comparison exceeds a first predetermined threshold,
- correction of the second temperature value on the basis of the first temperature value, when said comparison is lower than a second predetermined threshold lower than said first threshold.

4. Method according to any one of the preceding claims, comprising a fifth step (step 5) for limiting the maximum rotation speed of the prime mover as a function of the temperature calculated or corrected by means of said first temperature value.

5. System for determining a temperature of a hydraulic oil of a hydrostat comprising a hydraulic pump (HP) adapted to be driven in rotation by a prime mover (E) and a hydraulic motor (HM) operatively connected to a vehicle wheel (Wheels), the hydraulic motor being operatively associated with the hydraulic pump by means of a hydraulic delivery line (F) and a hydraulic return line (R) of the hydraulic liquid, the hydraulic pump being associated in a group (HPS) to a booster pump (BP), arranged to be driven in rotation by the prime mover and configured to pressurize said hydraulic liquid return line through a mechanical regulating valve (RV), calibrated to pressurize the return line as a function of the temperature of the hydraulic oil and the flow generated by the booster pump, and wherein the valve calibration is mapped to a look up table 3D able to relate a pressure and a flow, generated by the booster pump, with a temperature of the hydraulic oil, the system comprising
- a pressure sensor (SR, SF) placed on the hydraulic return line,
- processing means (UCM) operatively associated with said pressure sensor and configured to calculate a first temperature value of the hydraulic oil on the basis of a pressure value, measured by said pressure sensor, by means of a look up table 3D which maps the calibration of the regulating valve (RV).

6. A computer program comprising instructions to cause the processing means of the previous claim to execute the steps of the method claim 1.

7. A computer-readable medium having stored thereon the computer program of claim 6.

8. Monitoring system of an operating condition of a temperature sensor (TS) associated with a hydrostat to measure a temperature of a relative hydraulic oil, the hydrostat including a hydraulic pump (HP) able to be driven in rotation by a prime mover (E) and a hydraulic motor (HM) operatively connected to a vehicle wheel (Wheels), the hydraulic motor being operatively associated to the hydraulic pump by means of a delivery hydraulic line (F) and a return hydraulic line (R) hydraulic fluid, the hydraulic pump being associated as a group (HPS) with a booster pump (BP), able to be driven in rotation by the prime mover and configured to pressurize said return line of the hydraulic fluid through a regulating valve (RV) mechanical, calibrated to pressurize the return line according to at least the temperature of the hydraulic oil, including
- a pressure sensor (SR, SF) placed on the hydraulic return line,
- processing means (UCM) operatively associated with said pressure sensor and said temperature sensor (TS) and configured to calculate a first temperature value of the hydraulic oil of the hydrostat on the basis of a pressure value measured by said pressure sensor pressure by means of a look up table 3D that maps the calibration of the regulation valve (RV) and to monitor the operating status of the temperature sensor by comparing said first temperature value with a second temperature value generated by said temperature sensor (TS), wherein said look up table 3D is able to relate a pressure and a flow, generated by the booster pump, with a temperature of the hydraulic oil.

9. System according to claim 5 or 8, further comprising a speed sensor (SS) arranged to measure an engine speed of the prime mover (E) and operatively associated with said processing means (UCM) and wherein said processing means are configured
- to convert a prime mover rotation speed value into a flow value generated by the booster pump and
- to calculate said first temperature value of the hydraulic oil of the hydrostat on the basis of the pressure value measured by the pressure sensor (SF, SR) and on the basis of the flow value generated by the booster pump.

10. Agricultural or working vehicle equipped with a hydrostat (HY) and a system for determining a temperature of a hydraulic oil of the hydrostat according to claim 8 and/or a system for monitoring an operating condition of a temperature sensor (TS) associated with the hydrostat according to claim 9.

## Patentansprüche

1. Verfahren zur Bestimmung einer Temperatur eines Hydrauliköls eines Hydrostats (HY) umfassend eine Hydraulikpumpe (HP), die dazu eingerichtet ist, von einem Antriebsaggregat (E) und einem Hydraulikmotor (HM), der mit einem Rad (mit Rädern) des Fahrzeugs in Wirkverbindung steht, drehend angetrieben zu werden, wobei der Hydraulikmotor mit der Hydraulikpumpe durch eine hydraulische Zuführleitung (F) und eine hydraulische Rücklaufleitung (R) der Hydraulikflüssigkeit in Wirkverbindung steht, wobei die Hydraulikpumpe in einer Gruppe (HPS) einer Druckerhöhungspumpe (BP) zugeordnet ist, die dazu eingerichtet ist, von dem Antriebsaggregat drehend angetrieben zu werden, und die dazu eingerichtet ist, die hydraulische Rücklaufleitung über ein mechanisches Steuerungsventil (RV) mit Druck zu beaufschlagen, das dazu kalibriert ist, die hydraulische Rücklaufleitung in Abhängigkeit von zumindest der Hydrauliköl-Temperatur mit Druck zu beaufschlagen, wobei das Verfahren zur Bestimmung der Temperatur des Hydrauliköls einen ersten Schritt (Schritt 1) des Beschaffens eines Druckwertes der hydraulischen Rücklaufleitung und einen folgenden zweiten Schritt (Schritt 2) des Konvertierens des Druckwertes in einen ersten Temperaturwert auf Basis der Einstellung des Steuerungsventils (RV) umfasst,
wobei das Verfahren **dadurch gekennzeichnet ist, dass**
das Steuerungsventil dazu kalibriert ist, die Rücklaufleitung in Abhängigkeit von der Temperatur des Hydrauliköls und der Strömung, die durch die Druckerhöhungspumpe erzeugt wird, mit Druck zu beaufschlagen, und wobei die Kalibrierung des Ventils mit einer 3D-Nachschlagetabelle verknüpft ist, die dazu geeignet ist, einen Druck und eine Strömung, die durch die Druckerhöhungspumpe erzeugt werden, einer Temperatur des Hydrauliköls zuzuordnen.

2. Verfahren nach Anspruch 1, wobei der Strömungswert auf Basis einer Drehzahl des Antriebsaggregats (E), das die Druckerhöhungspumpe drehend antreibt, berechnet wird (Schritt 0).

3. Verfahren nach einem der vorhergehenden Ansprüche, weiterhin umfassend einen dritten Schritt (Schritt 3) des Vergleichens des ersten Temperaturwerts mit einem zweiten Temperaturwert, der von einem Temperatursensor (TS) erhalten wird, der mit dem Hydrostat in Wirkverbindung steht, und einen darauffolgenden vierten Schritt (Schritt 4) umfassend:
Signalisieren einer Funktionsstörung des Temperatursensors, wenn der Vergleich einen ersten vorbestimmten Grenzwert überschreitet,
Korrigieren des zweiten Temperaturwerts auf Basis des ersten Temperaturwerts, wenn der Vergleich einen zweiten vorbestimmten Grenzwert, der niedriger als der erste Grenzwert ist, unterschreitet.

4. Verfahren nach einem der vorhergehenden Ansprüche, umfassend einen fünften Schritt (Schritt 5) zur Begrenzung der maximalen Drehzahl des Antriebsaggregats in Abhängigkeit von der Temperatur, die mittels des ersten Temperaturwerts berechnet oder korrigiert wurde.

5. System zur Bestimmung einer Temperatur eines Hydrauliköls eines Hydrostats mit einer Hydraulikpumpe (HP), die dazu eingerichtet ist, von einem Antriebsaggregat (E) und einem Hydraulikmotor (HM), der mit einem Rad (mit Rädern) des Fahrzeugs in Wirkverbindung steht, drehend angetrieben zu werden, wobei der Hydraulikmotor mit der Hydraulikpumpe durch eine hydraulische Zuführleitung (F) und eine hydraulische Rücklaufleitung (R) der Hydraulikflüssigkeit in Wirkverbindung steht, wobei die Hydraulikpumpe in einer Gruppe (HPS) einer Druckerhöhungspumpe (BP) zugeordnet ist, die dazu eingerichtet ist, von dem Antriebsaggregat drehend angetrieben zu werden, und die dazu eingerichtet ist, die hydraulische Rücklaufleitung über ein mechanisches Steuerungsventil (RV) mit Druck zu beaufschlagen, das dazu kalibriert ist, die Rücklaufleitung in Abhängigkeit von der Temperatur des Hydrauliköls und der von der Druckerhöhungspumpe erzeugten Strömung mit Druck zu beaufschlagen, und wobei die Kalibrierung des Ventils mit einer 3D-Nachschlagetabelle verknüpft ist, die dazu geeignet ist, einen Druck und eine Strömung, die durch die Druckerhöhungspumpe erzeugt werden, einer Temperatur des Hydrauliköls zuzuordnen, wobei das System umfasst:
einen Drucksensor (SR, SF), der an der hydraulischen Rücklaufleitung angeordnet ist,
eine Verarbeitungseinrichtung (UCM), die mit dem Drucksensor in Wirkverbindung steht und die dazu eingerichtet ist, einen ersten Temperaturwert des Hydrauliköls auf Basis eines Druckwertes, der von dem Drucksensor gemessen wird, mittels einer 3D-Nachschlagetabelle zu berechnen, welche die Kalibrierung des Steuerungsventils (RV) abbildet.

6. Computerprogramm mit Anweisungen, die die Verarbeitungseinrichtung des vorhergehenden Anspruchs dazu veranlassen, die Schritte des Verfahrensanspruchs 1 auszuführen.

7. Computerlesbares Medium, auf dem das Computerprogramm nach Anspruch 6 gespeichert ist.

8. Überwachungssystem für einen Betriebszustand eines Temperatursensors (TS), der einem Hydrostat zugeordnet ist, um eine Temperatur eines entsprechenden Hydrauliköls zu messen, wobei der Hydrostat eine Hydraulikpumpe (HP) umfasst, die in der Lage ist, von einem Antriebsaggregat (E) und einem Hydraulikmotor (HM), der mit einem Rad (mit Rädern) des Fahrzeugs in Wirkverbindung steht, drehend angetrieben zu werden, wobei der Hydraulikmotor mit der Hydraulikpumpe durch eine hydraulische Zuführleitung (F) und eine hydraulische Rücklaufleitung (R) der Hydraulikflüssigkeit in Wirkverbindung steht, wobei die Hydraulikpumpe in einer Gruppe (HPS) einer Druckerhöhungspumpe (BP) zugeordnet ist, die in der Lage ist, von dem Antriebsaggregat drehend angetrieben zu werden, und die dazu eingerichtet ist, die Rücklaufleitung der Hydraulikflüssigkeit über ein mechanisches Steuerungsventil (RV) mit Druck zu beaufschlagen, das dazu kalibriert ist, die Rücklaufleitung gemäß zumindest der Temperatur des Hydrauliköls mit Druck zu beaufschlagen, umfassend:
einen Drucksensor (SR, SF), der an der hydraulischen Rücklaufleitung angeordnet ist,
eine Verarbeitungseinrichtung (UCM), die mit dem Drucksensor und dem Temperatursensor (TS) in Wirkverbindung steht und die dazu eingerichtet ist, einen ersten Temperaturwert des Hydrauliköls des Hydrostats auf Basis eines Druckwertes, der von dem Drucksensor gemessen wird, mittels der 3D-Nachschlagetabelle zu berechnen, die die Kalibrierung des Steuerungsventils (RV) abbildet, und um den Betriebsstatus des Temperatursensors durch das Vergleichen des ersten Temperaturwerts mit einem zweiten Temperaturwert, der von dem Temperatursensor (TS) erzeugt wird, zu überwachen, wobei die 3D-Nachschlagetabelle in der Lage ist, einen Druck und eine Strömung, die durch die Druckerhöhungspumpe erzeugt werden, einer Temperatur des Hydrauliköls zuzuordnen.

9. System nach Anspruch 5 oder 8, weiterhin umfassend einen Drehzahlgeber (SS), der dazu eingerichtet ist, eine Motordrehzahl des Antriebsaggregats (E) zu erfassen, und der mit der Verarbeitungseinrichtung (UCM) in Wirkverbindung steht, wobei die Verarbeitungseinrichtung dazu eingerichtet ist,
einen Drehzahlwert des Antriebsaggregats in einen Strömungswert zu umzuwandeln, der durch die Druckerhöhungspumpe erzeugt wird, und
den ersten Temperarturwert des Hydrauliköls des Hydrostats auf Basis des Druckwerts, der durch den Drucksensor (SF, SR) erfasst wird, und auf Basis des Strömungswerts, der durch die Druckerhöhungspumpe erzeugt wird, zu berechnen.

10. Landwirtschaftliches Fahrzeug oder Arbeitsfahrzeug, das mit einem Hydrostat (HY) und einem System zur Bestimmung einer Temperatur eines Hydrauliköls des Hydrostats nach Anspruch 8 und/oder einem System nach Anspruch 9 zur Überwachung eines Betriebszustands eines Temperatursensors (TS), der dem Hydrostat zugeordnet ist, ausgestattet ist.

## Revendications

1. Procédé de détermination d'une température d'une huile hydraulique d'un hydrostat (HY) comprenant une pompe hydraulique (HP) destinée à être entraînée en rotation par un moteur primaire (E) et un moteur hydraulique (HM) raccordés fonctionnellement à une roue de véhicule (Wheels), le moteur hydraulique étant associé fonctionnellement à la pompe hydraulique par le biais d'une conduite de refoulement hydraulique (F) et d'une conduite de retour hydraulique (R) du fluide hydraulique, la pompe hydraulique étant associée dans un groupe (HPS) à une pompe de surpression (BP), destinée à être entraînée en rotation par le moteur primaire et configurée pour pressuriser ladite conduite de retour hydraulique par l'intermédiaire d'une vanne de régulation mécanique (RV), étalonnée pour pressuriser la conduite de retour au moins en fonction de la température de l'huile hydraulique, le procédé de détermination de la température de l'huile hydraulique incluant une première étape (Step 1) d'acquisition d'une valeur de pression de la conduite de retour hydraulique et une deuxième étape consécutive (Step 2) de conversion de ladite valeur de pression en une première valeur de température basée sur le réglage de la vanne de régulation (RV),
le procédé est **caractérisé en ce que**
ladite vanne de régulation est étalonnée pour pressuriser la conduite de retour en fonction de la température de l'huile hydraulique et du débit généré par la pompe de surpression, et dans lequel l'étalonnage de la vanne est mis en correspondance avec une table de recherche 3D capable de relier une pression et un débit, générés par la pompe de surpression, à une température de l'huile hydraulique.

2. Procédé selon la revendication 1, dans lequel ladite valeur de débit est calculée (Step 0) sur la base d'une vitesse de rotation du moteur primaire (E) qui entraîne la pompe de surpression en rotation.

3. Procédé selon l'une quelconque des revendications précédentes, comprenant en outre une troisième étape (Step 3) de comparaison de ladite première valeur de température avec une seconde valeur de température obtenue à partir d'un capteur de température (TS) associé fonctionnellement à l'hydrostat, et une quatrième étape consécutive (Step 4) comprenant
la signalisation d'un dysfonctionnement du capteur de température, lorsque ladite comparaison dépasse un premier seuil prédéterminé,
la correction de la seconde valeur de température en fonction de la première valeur de température, lorsque ladite comparaison est inférieure à un second seuil prédéterminé inférieur audit premier seuil.

4. Procédé selon l'une quelconque des revendications précédentes, comprenant une cinquième étape (Step 5) de limitation de la vitesse de rotation maximale du moteur primaire en fonction de la température calculée ou corrigée par le biais de ladite première valeur de température.

5. Système de détermination d'une température d'une huile hydraulique d'un hydrostat comprenant une pompe hydraulique (HP) destinée à être entraînée en rotation par un moteur primaire (E) et un moteur hydraulique (HM) raccordés fonctionnellement à une roue du véhicule (Wheels), le moteur hydraulique étant associé fonctionnellement à la pompe hydraulique par le biais d'une conduite de refoulement hydraulique (F) et d'une conduite de retour hydraulique (R) du liquide hydraulique, la pompe hydraulique étant associée dans un groupe (HPS) à une pompe de surpression (BP), agencée pour être entraînée en rotation par le moteur primaire et configurée pour pressuriser ladite conduite de retour du liquide hydraulique par l'intermédiaire d'une vanne de régulation mécanique (RV), étalonnée pour pressuriser la conduite de retour en fonction de la température de l'huile hydraulique et du débit généré par la pompe de surpression, et dans lequel l'étalonnage de la vanne est mis en correspondance avec une table de recherche 3D capable de relier une pression et un débit, générés par la pompe de surpression, à une température de l'huile hydraulique, le système comprenant
un capteur de pression (SR, SF) placé sur la conduite de retour hydraulique, des moyens de traitement (UCM) fonctionnellement associés audit capteur de pression et configurés pour calculer une première valeur de température de l'huile hydraulique en fonction d'une valeur de pression, mesurée par ledit capteur de pression, à l'aide d'une table de recherche 3D qui met en correspondance l'étalonnage de la vanne de régulation (RV).

6. Un programme informatique comprenant des instructions pour amener les moyens de traitement selon la revendication précédente à exécuter les étapes du procédé selon la revendication 1.

7. Un support lisible par ordinateur sur lequel est stocké le programme informatique selon la revendication 6.

8. Système de surveillance d'un état de fonctionnement d'un capteur de température (TS) associé à un hydrostat pour mesurer une température d'une huile hydraulique relative, l'hydrostat incluant une pompe hydraulique (HP) pouvant être entraînée en rotation par un moteur primaire (E) et un moteur hydraulique (HM) fonctionnellement raccordé à une roue de véhicule (Wheels), le moteur hydraulique étant fonctionnellement associé à la pompe hydraulique par l'intermédiaire d'une conduite de refoulement hydraulique (F) et d'une conduite de retour hydraulique (R) de fluide hydraulique, la pompe hydraulique étant associée en tant que groupe (HPS) à une pompe de surpression (BP), capable d'être entraînée en rotation par le moteur primaire et configurée pour pressuriser ladite conduite de retour du fluide hydraulique par l'intermédiaire d'une vanne de régulation (RV) mécanique, étalonnée pour pressuriser la conduite de retour en fonction d'au moins la température de l'huile hydraulique, incluant
un capteur de pression (SR, SF) placé sur la conduite de retour hydraulique,
des moyens de traitement (UCM) associés fonctionnellement audit capteur de pression et audit capteur de température (TS) et configurés pour calculer une première valeur de température de l'huile hydraulique de l'hydrostat en fonction d'une valeur de pression mesurée par ladite pression du capteur de pression à l'aide d'une table de recherche 3D qui met en correspondance l'étalonnage de la vanne de régulation (RV) et pour surveiller l'état de fonctionnement du capteur de température en comparant ladite première valeur de température avec une seconde valeur de température générée par ledit capteur de température (TS), dans lequel ladite table de recherche 3D est capable de relier une pression et un débit, générés par la pompe de surpression, avec une température de l'huile hydraulique.

9. Système selon la revendication 5 ou la revendication 8, comprenant en outre un capteur de vitesse (SS) agencé pour mesurer un régime moteur du moteur primaire (E) et associé fonctionnellement aux moyens de traitement (UCM), et dans lequel lesdits moyens de traitement sont configurés pour
convertir une valeur de vitesse de rotation de moteur primaire en une valeur de débit générée par la pompe de surpression et
calculer ladite première valeur de température de l'huile hydraulique de l'hydrostat en fonction de la valeur de pression mesurée par le capteur de pression (SF, SR) et en fonction de la valeur de débit générée par la pompe de surpression.

10. Véhicule agricole ou de travail équipé d'un hydrostat (HY) et d'un système de détermination d'une température d'une huile hydraulique de l'hydrostat selon la revendication 8 et/ou d'un système de surveillance d'un état de fonctionnement d'un capteur de température (TS) associé à l'hydrostat selon la revendication 9.
